# EUROPEAN PATENT APPLICATION

(11) **EP 0 636 990 A2**
(43) Date of publication of application: **01.02.1995**
(21) Application number: 94111593.3
(22) Date of filing: 26.07.1994
(51) Int. Cl.: G06F 15/80, G06T 1/20

(54) **Computer architecture for the efficient extraction and transfer of iconic/symbolic information between processing element levels in an image understanding machine**

(30) Priority: 28.07.1993 US 99300
(71) Applicant: Hughes Aircraft Company, Los Angeles, California 90045-0066 (US)
(72) Inventor: Shu, David B., Canoga Park, CA 91304 (US)
(74) Representative: Witte, Alexander, Dr.-Ing.

(57) **Abstract**

A computer for implementing an algorithmic method for extracting iconic/symbolic information from image data in a parallel processing environment is disclosed. A register (110) is associated with each of a plurality of processing elements (PE) in a lower level processing, and the iconic/symbolic image data is transferred to a higher level processing, over data buses (F1, F2) linking the two levels of the processing, based on the condition of the register (110).

## Description

### CROSS REFERENCE TO RELATED U.S. PATENTS

This application is related to the following U.S. Patents: U.S. Patent No. 4,809,346 issued February 28, 1989 entitled "Computer Vision Architecture for Iconic to Symbolic Transformation"; U.S. Patent No. 4,809,347 issued February 28, 1989 entitled "Computer Vision Architecture"; and, U.S. Patent No. 4,901,360 issued February 13, 1990 entitled "Gated Architecture for Computer Vision Machine", all of which are assigned to Hughes Aircraft Company, the assignee of the present invention.

### BACKGROUND OF THE INVENTION

### 1. Field of the Invention

This invention relates in general to computer vision or image understanding machines and, more particularly, to computer architectures and methods capable of both arithmetic or iconic and symbolic processing of image data.

### 2. Description of the Related Art

There exists a need for a computer system that is capable of both arithmetic or iconic and symbolic processing of image data which is designed specifically for use in computer vision research and analyses efforts. Such a system can be used in a variety of different applications such as for use in real time processing of data from radar, infrared and visible sensors in areas such as aircraft navigation and reconnaissance. Another application of such a machine would be as a development system for use in vision laboratories in the implementation and simulation of many computationally intensive algorithms.

Machines which are capable of operating on image data (as compared to merely arithmetic data) are referred to alternatively as image processors, vision computers, image understanding machines and the like. Image understanding machines are sometimes thought of as a higher level machine than an image processor which is typically referred to as a machine for enhancing and classifying images whereas an image understanding machine involves the automatic transformation of the image to symbolic form, effectively providing a high level description of the image in terms of objects (i.e., a connected set of pixels containing information), their attributes, and their relationship to other objects in the image. The present invention is directed to this latter type of machine (although it can do the lower level tasks as well) and shall be referred to as an image understanding machine.

It is generally recognized that a high level image understanding machine must be capable of performing two basic types of computations: arithmetic or iconic processing and symbolic manipulation. Thus, it would be desirable to provide an image understanding machine that is capable of performing a number of visual information processing algorithms.

It should be noted that future algorithmic developments will be a continually and rapidly evolving activity resulting from changing applications, advances in sensor and solid state technologies, and the need for added intelligence to deal even more rapidly and effectively with ever increasing amounts of raw data.

Many of the known concurrent or parallel processing computer architectures are not specifically intended to be used for image understanding purposes. Other image processing systems also suffer from the inability to efficiently perform both numeric and symbolic computations. For example, some of the prior architectures do not lend themselves to efficiently execute various artificial intelligence techniques such as frames, rules and evidential reasoning, while at the same time being capable of efficiently doing more iconic related image processing algorithms. One of the major drawbacks in the prior computer architectures was that their designs generally necessitated the transfer of large amounts of data between a host computer and the special purpose vision computer, and in parallel processing environments using a plurality of processing levels, between a lower and a higher processing level of processing elements.

Unfortunately, the transfer of data and instructions in the known architectures resulted in relatively slow operational speed. It is of course one of the ultimate objectives in any computer system to increase the speed of operation without unduly increasing costs or complexity of operation.

As noted above and by way of background, architecture for an image understanding machine is disclosed in the aforementioned U.S. Patents for performing both iconic and symbolic operations on image data in the form of a matrix of pixels. Such machines include a first level of image processing elements for operating on the image matrix on a pixel per processing element basis. Each processing element of the first level is adapted to communicate with each other. A second level of processing elements is provided for operating on a plurality of pixels associated with a given array of the processing elements of the first level. Each second level processing element is associated with a group of first level processing elements and communicates therewith as well as with other second level processing elements. A third level of processing elements is provided for performing such functions as instructing the first and second level of processing elements. It is also designed to operate on a larger segment of the matrix than the second level processing elements. Each third level processing element is associated with a given number of second level processing elements and communicates therewith as well as with other third level processing elements. A host computer communicating with at least each third level processing element is provided for performing such functions as instructing the third level processing elements.

This computer architecture is designed to solve the problem of the disparities in granularity from iconic processing to symbolic processing. By the term "granularity" it is meant that the processing power of each processing element at a given level is comparable to the area (i.e., grain size) of the image segment associated with it. The larger the grain size the more powerful the processing element becomes.

This architecture in general provides an efficient implementation match at each level of granularity. Thus, for iconic processing which requires the smallest granularity, a processor per pixel approach is provided (i.e., the first level processing elements) to efficiently perform these tasks. On the other hand, for higher level or more sophisticated operations, the third level processing elements are provided which can be implemented in the form of general purpose microprocessors.

The computer architecture provides parallelism at substantially all levels of computation. Thus, bottlenecks which are often associated with serial computations or communications are avoided.

Existing technique requires the higher level processing elements to scan through all of the two-dimensional array of data held by the lower level processing elements to extract the desired symbolic information from the lower level processing elements which contain both iconic and symbolic data in an image array.

Assuming that there are M objects in an L x N image, in a parallel architecture as described herein, all objects in the image can be processed in parallel. The scan time for this operation is proportional to the image size and is therefore very large for even moderate sized image planes, i.e., it takes O(LxN) time to scan the results and to detect the M objects in the image by the higher level processing elements. However, since the time to extract the symbolic information is proportional to the number of objects in the image, this number is very small compared to the image size. Since only the M objects are of interest, it is a disadvantage that the higher level processing elements have to step over the non-object containing areas to find the objects in the iconic data.

This invention is an improvement of the "Computer Vision Architecture for Iconic to Symbolic Transformation" of U.S. Patent No. 4,809,346 referenced above. This patent specified an architectural implementation of an algorithm to assign in parallel an unique symbol/label to every object (i.e., connected set of pixels) found in an image. It did not, however, specify how to gather those assigned symbols by the higher level process. The most straightforward way to gather these symbols for higher level processing is to scan the results of each of the lower level processing elements and detect all of the symbols in the iconic data. The scan time is proportional to the image size, and therefore very slow. However, the number of symbols found in the image data is usually very small compared to the image size. The time it takes to complete the detection phase is directly proportional to the number of symbols in the image and is therefore much shorter.

### SUMMARY OF THE INVENTION

The approach of the present invention adds to that of the patents referenced above by providing an efficient means of communication back and forth between signal processing activities and the symbolic activities, i.e., the efficient extraction and transfer of symbolic data embedded in an array of image data to another processing level.

The interconnection system of the machine of this invention connects different levels of processing elements in such a way as to match the characteristics of most computer vision problems and the manner in which they are solved by way of implementing the various algorithms. In addition, the architecture provides a modular, reliable and relatively low cost approach.

Among the advantages and characteristics of this architecture include: hardware to match problem granularity, parallel operation throughout the problem, high efficiency for symbolic operation, the capability to perform both low-level (iconic) and high-level (symbolic) processing, a high degree of parallelism in system hierarchy, a highly testable structure of identical elements, optimal locality of operation - data essentially remains in place, minimal demands on global data bus bandwidth, identical processing elements of relatively simple design, and a highly efficient architecture for the extraction and transferral of desired information embedded in a larger array of information for processing between processing levels.

The machine of the present invention is an architectural approach that provides an efficient mechanism to compress sparsely populated iconic/symbolic image data into a dense form for extraction or retrieval and transfer. A V-bit register is added to each processing element in a processing level as found in a parallel architecture as outlined above. The desired iconic/symbolic image data is transferred out of the processing elements of one level to the next level of processing elements for higher level processing based on the condition of the V-bit registers.

This invention provides architecture support for an image understanding machine to enable it to skip the very slow scanning operation and therefore speed up the overall process of extracting symbolic information from the iconic image information.

The novel features of construction and operation of the invention will be more clearly apparent during the course of the following description, reference being had to the accompanying drawings wherein has been illustrated a preferred form of the device of the invention and wherein like characters of reference designate like parts throughout the drawings.

### BRIEF DESCRIPTION OF THE FIGURES

Figure 1 is a block diagram illustrating the extraction of five symbols from processing elements in a single level to transmission to processing elements at a higher level;
Figure 2 is a schematic diagram of one embodiment of a circuit showing the component architecture and operational processing flow to generate a control signal to select and control data flow on the plurality of data buses between levels of processing elements in accordance with the present invention.

### DESCRIPTION OF THE PREFERRED EMBODIMENT

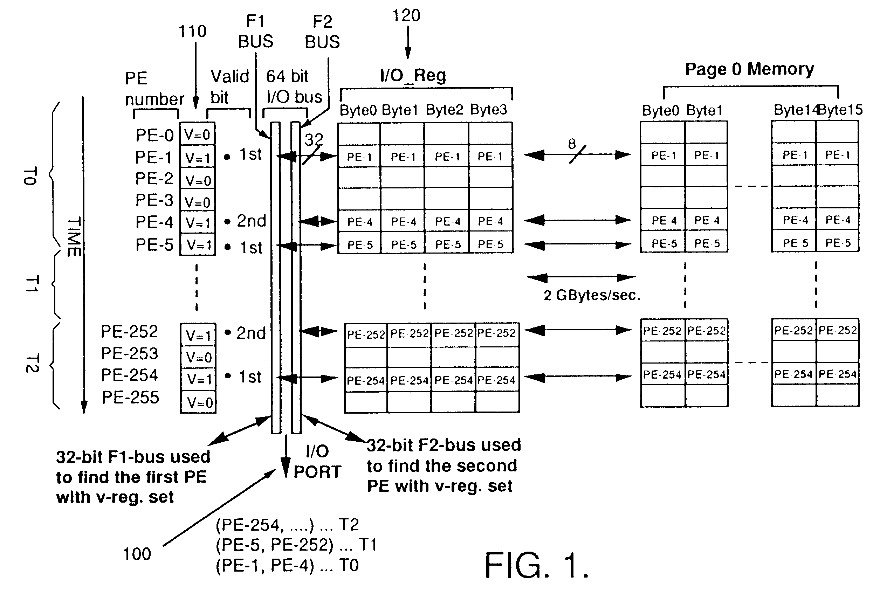

The computer architecture for the image understanding machine of the present invention is illustrated in FIG. 1 embodied in a VLSI chip containing 256 processing elements arranged in a 16 x 16 two-dimensional array. For ease in referral and locating any one particular processing element of the array in the example given, the processing elements of the array are systematically arranged, as, for example, by lexicographically ordering them as PE0 to PE255. For the purposes of this example, five symbols of interest are assumed to be located at processing elements PE1, PE4, PE5, PE252 and PE254, and that each symbol contains 32 bits of information. As noted in FIG. 1, at time t = TO, symbolic information from PE1 and PE4 will be sent to the Input/Output port 100. Similarly, at time t = T1, symbolic information from PE5 and PE252 will be sent to the Input/Output port 100. Likewise, at time t = T2, the symbolic information from PE254 will be sent the Input/Output port 100 for transmission to the next higher level of processing.

A one-bit V-register 110 and a 32 bit Input/Output register 120 are added to the basic ALU architecture of each Processing Element PE0 to PE255. The V-register 110 controls whether or not the contents of its corresponding Input/Output register 120 will be sent to the Input/Output port 100. For example, if the contents of the V-register equal 1 the information in its corresponding Input/Output register should be sent, and if the contents of the V-register equal 0 the information in its corresponding Input/Output register should not be sent.

The 64 bit Input/Output port 100 is connected to two 32 bit Input/Output data buses, F1-bus and F2-bus. At a given Input/Output cycle, the F1-bus is used by the first Processing Element (PE) in a set still having a symbol to transmit. The F2-bus is used by the second processing element (PE) in line as the order of transmission is systematic, i.e., during time T0 information from the Input/Output registers 120 associated with PE1 and PE4 are transmitted via data buses F1-bus and F2-bus respectively. During time T1 which may occurring during the transmission of the symbols associated with PE1 and PE4, the next two processing elements having a symbol to transmit are found by continuing to parse the remaining processing elements in a systematic or lexicographic order, i.e., PE5 and PE252, and the symbols associated with these two processing elements is transmitted over data buses F1-bus and F-2 bus when they become available.

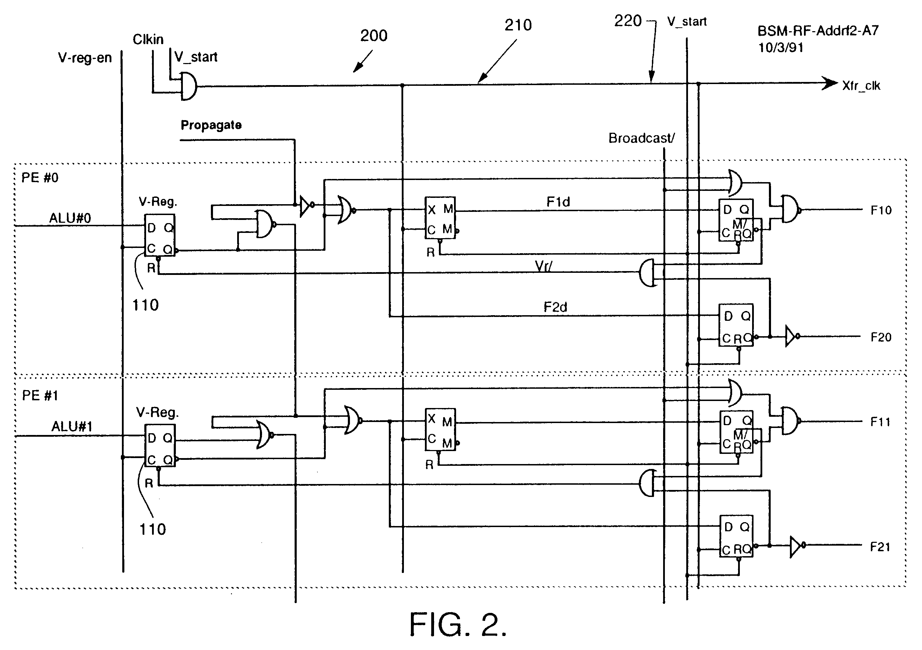

FIG. 2 illustrates in schematic form a circuit that embodies and implements the present invention for the example given above. The circuit 200 is shown in FIG. 2 as it would be implemented for processing elements PE0 and PE1 of the above example. Circuit 200 contains the V-register 110 associated with processing elements PE0 and PE1 and the find-first and find-second circuitry 210 and 220, respectively. On the right hand side are the output enable signals F10, F11, F20 and F21. F10 enables the Input/Output register from PE0 to drive the F1-bus, and F11 enables the Input/Output register from PE1 to drive the F1-bus. Similarly, F20 enables the Input/Output register from PE0 to drive the F2-bus, and F21 enables the Input/Output register from PE1 to drive the F2-bus.

To complete the embodiment, there are 128 duplications of circuit 200 in these two boxes for PE0 and PE1 to support the targeted 256 Processing Elements per chip.

The number of the Input/Output bus for data communication between levels of processing does not have to be limited to two F-1 bus and F-2 bus, but can be from 1 to n depending on the desired architecture of the specific image understanding machine.

For a system with n Input/Output buses, at a given Input/Output cycle, the circuit would need to find the first n systematically ordered (i.e., lexicographic) symbols in the Processing Element array.

The invention described above is, of course, susceptible to many variations, modifications and changes, all of which are within the skill of the art. It should be understood that all such variations, modifications and changes are within the spirit and scope of the invention and of the appended claims. Similarly, it will be understood that Applicant intends to cover and claim all changes, modifications and variations of the example of the preferred embodiment of the invention herein disclosed for the purpose of illustration which do not constitute departures from the spirit and scope of the present invention.

## Claims

1. A computer for implementing an algorithmic method for extracting iconic/symbolic information in a parallel processing environment, comprising:
- an input/output port (100), and
- memory means connected to a plurality of processing elements (PE) for retaining data therein
characterized by:
- each processing element (PE) having associated therewith a first and a second register (110, 120), said first register (110) adapted to retain data representative of a first send state and of a second no send state, said second register (120) adapted to retain data therein for use in accessing and transferring data between said memory means and said input/output port (100);
- at least one data bus (F1, F2) connected to each of said second registers (120), said memory means and said input/output port (100) for the transfer of data from said memory means to said input/output port (100);
- data bus control means for controlling the flow of data on at least one data bus (F1, F2) in accord with the data retained in a selected one of said second registers (120) to said I/O port (100); and
- logic means, controlling said data bus control means, for enabling/disabling each of said processing element (PE), and determing the state of the contents of each of said first registers (110) of each of said processing elements (PE), said logic means providing the address value of the corresponding second register (120) to said data bus control means for transferring data in accord with the data retained in said corresponding second register (120) to said input/output port (100), whenever the contents of said first register (110) are determined to be in said send state.

2. The computer of claim 1, characterized in that said memory means comprises a plurality of local memory means, each local memory means associated with a corresponding processing element.

3. The computer of claim 1 or 2, characterized in that said memory means comprises a one memory subsystem connected to each of said processing elements (PE).

4. The computer of any of claims 1 - 3, characterized in that said first register (110) is a one bit V-register.

5. The computer of any of claims 1 - 4, characterized in that said second register (120) is a thirty-two bit register.

6. The computer of any of claims 1 - 5, characterized in that there are at least two data buses (F1, F2), connected to each of said second registers (120), said memory means and said input/output port (100) for the transfer of data from said memory means to said input/output port (100); and
- said data bus control means is further adapted for selecting an available unused one of said at least two data buses (F1, F2).

7. The computer of any of claims 1 - 6, characterized in that said data buses (F1, F2) are each thirty-two bit data buses or integer multiples of thirty-two bit data buses.

8. The computer of any of claims 1 - 7, characterized in that said input/output port (100) is an integer multiple of a thirty-two bit data port, preferably a sixty-four bit data port.

9. A computer for implementing an algorithmic method for extracting iconic/symbolic information in a parallel processing environment, comprising an input/output (I/O) port (100), characterized by:
- a plurality of processing elements (PE), each processing element (PE) having associated therewith a V-bit register (110) and an I/O register (120), said V-bit register (110) adapted to receive and retain therein data representative of a first send state and of a second no send state, said I/O register (120) adapted for use in accessing and transferring data between the processing element (PE) and the I/O port (100);
- first and second data buses (F1, F2) connected to said I/O registers (120) and to said I/O port (100) for the transfer of data therebetween;
- control means for selecting said first or second data buses (F1, F2) for controlling the transfer of data thereon from said processing elements (PE) to said I/O port (100); and
- logic means for passing and comparing the contents of each of said V-bit registers (110) and providing each of said I/O registers (120) associated with said V-bit registers (110) and providing each of said I/O registers (120) associated with said V-bit register (110) to said control means whenever the contents of said V-bit registers (110) are determined to be in said send state.

10. An algorithmic method for extracting iconic/symbolic information in a parallel processing environment, utilizing a computer having
- an input/output port (100),
- memory means connected to a plurality of processing elements (PE) for retaining data therein,
- each processing element (PE) having associated therewith a first and a second register (110, 120), said first register (110) adapted to retain data representative of a first send state and of a second no send state, said second register (120) adapted to retain data therein for use in accessing and transferring data between said memory means and said input/output port (100);
- at least one data bus (F1, F2) connected to each of said second registers (120), said memory means and said input/output port (100) for the transfer of data from said memory means to said input/output port (100);
- data bus control means for controlling the flow of data on at least one data bus (F1, F2) in accord with the data retained in a selected one of said second registers (120) to said I/O port (100); and
- logic means, controlling said data bus control means, for enabling/disabling each of said processing element (PE), and determing the state of the contents of each of said first registers (110) of each of said processing elements (PE), said logic means providing the address value of the corresponding second register (120) to said data bus control means for transferring data in accord with the data retained in said corresponding second register (120) to said input/output port (100), whenever the contents of said first register (110) are determined to be in said send state.

11. The method of claim 10, characterized in that the step of enabling/disabling each of said processing elements (PE) further includes enabling/disabling each of said processing elements (PE) in a systematic order.

12. A method for maximizing communication of information between the levels of processing elements (PE) in a machine having at least two levels of processing elements (PE) communicating data therebetween and in which each level of processing elements (PE) analyzes two-dimensional data represented by a matrix of binary mask and a matrix of multiple-bit valued elements and extracts iconic/symbolic information therefrom in a parallel processing environment, characterized by the steps of:
- loading the pixels into a first level of processing elements (PE); such that each pixel is stored in a memory in one processing element (PE) of the first level of said processing elements (PE);
- associating a first and a second register (110, 120) with each of said processing elements (PE) in the first level, the first register (110) being adapted to retain data representative of a first send state and of a second no send state, and said second register (120) being adapted to retain data for use in accessing and transferring data between said memory and the second level of processing elements (PE);
- setting the contents of said first register (110) to said first send state whenever its associated processing element (PE) has data to send to the second level of processing elements (PE), and setting the contents of said first register (110) to said second no send state whenever its associated processing element (PE) does not have data to send to the second level of processing elements (PE);
- connecting at least a first and a second data bus (F1, F2) to each of said second registers (120), said memory and said second level of processing elements (PE) for the transfer of data from said memory to said second level of processing elements (PE);
- selecting an available unused one of said data buses (F1, F2) and controlling the flow of data thereon in accord with the data retained in a selected one of said second registers (120) to said second level of processing elements (PE) over said data buses (F1, F2); and
- controlling the selection and transfer of data on said data buses (F1, F2) by enabling/disabling each of said processing elements (PE), and determing the state of the contents of each of said first registers (110) of each of said processing elements (PE) and providing the data retained in the corresponding one of said second registers (120) for transferring data in accord with the data retained in said corresponding one of said second registers (120) to said second level of processing elements (PE), whenever the contents of said first register (110) are determined to be in said send state.
